# EUROPEAN PATENT SPECIFICATION

(11) **EP 1 240 729 B1**
(45) Date of publication and mention of the grant of the patent: **09.07.2008**
(21) Application number: 00989104.5
(22) Date of filing: 19.12.2000
(51) Int. Cl.: H04B 7/005

(54) **RADIO NETWORK CONTROL USING UPLINK MOBILE TRANSMIT POWER**
FUNKNETZSTEUERUNG UNTER VERWENDUNG VON MOBILE SENDELEISTUNG AUF DER AUFWÄRTSVERBINDUNG
CONTROLE DE RESEAU DE RADIOCOMMUNICATIONS A TRAVERS LA PUISSANCE D'EMISSION DE STATION MOBILE EN LIAISON MONTANTE

(30) Priority: 20.12.1999 US 467062
(43) Date of publication of application: 18.09.2002
(73) Proprietor: TELEFONAKTIEBOLAGET LM ERICSSON (publ), 164 83 Stockholm (SE)
(72) Inventor: ANDERSSON, Christoffer, SE-11426 Stockholm (SE); SÖDERBERG, Johan, S-977 52 Lulea (SE)
(74) Representative: Fäldt, Per-Henrik
(86) International application number: PCT/SE2000/002587
(87) International publication number: WO 2001/047146

(56) References cited:
- EP-A- 0 887 948
- US-A- 5 991 618
- HANLY S V: "AN ALGORITHM FOR COMBINED CELL-SITE SELECTION AND POWER CONTROL TO MAXIMIZE CELLULAR SPREAD SPECTRUM CAPACITY" IEEE JOURNAL ON SELECTED AREAS IN COMMUNICATIONS,US,IEEE INC. NEW YORK, vol. 13, no. 7, 1 September 1995 (1995-09-01), pages 1332-1340, XP000525658 ISSN: 0733-8716

## Description

### FIELD OF THE INVENTION

The present invention relates to mobile radio data communications, and in particular, to radio network control operations used to regulate one or more aspects of a radio user connection between a mobile station and the radio network.

### BACKGROUND AND SUMMARY OF THE INVENTION

In current and future mobile radio communications systems, a variety of different services are and will be provided. While mobile radio communications systems have traditionally provided circuit-switched services, e.g., to support voice calls, packet-switched data services are also becoming increasingly important. Example packet data services include e-mail, file transfers, and information retrieval using the Internet. Because packet data services often utilize system resources in a manner that varies over the course of a data packet session, the flow of packets is often characterized as "bursty." Third generation mobile communication systems must offer both circuit-switched services and packet-switched services. In addition, different bit rate services in the third generation systems must be accommodated. Although voice service may use only a single, relatively slow data rate like 64 kbps, data packet services may employ a wide range of bit rates as low as 8 kbps up to 2 Mbps.

Offering these different rate services presents a challenge to third generation cellular radio communication system designers. Different bit rates require different amounts of bandwidth and different amounts of transmission power. A higher data rate means that greater bandwidth is required. Assuming the greater bandwidth can be provided to a user connection, more noise is received (along with the desired information) across that wider bandwidth. Consequently, the desired signal must be transmitted at a greater power level to distinguish from the increased amount of received noise. Increases in the data rate require increases in required transmit power, e.g., a 64 kbps user connection requires more transmit power than a 32 kbps user connection. Third generation cellular communication systems are currently expected to support bit rates from 8 kbps to 2 Mbps, and as a result, the required amount of corresponding transmit power varies considerably.

Transmit power is a particularly precious resource in code division multiple access based mobile communications systems. The total power level is carefully controlled in the system to achieve maximum system capacity. In addition to capacity limitations, each mobile station has a physical maximum limit to the amount of transmit power it can generate in the uplink direction to one or more radio base stations. The inventors recognized that the transmit power capacity of the mobile station may significantly impact the type of services offered to that mobile station.

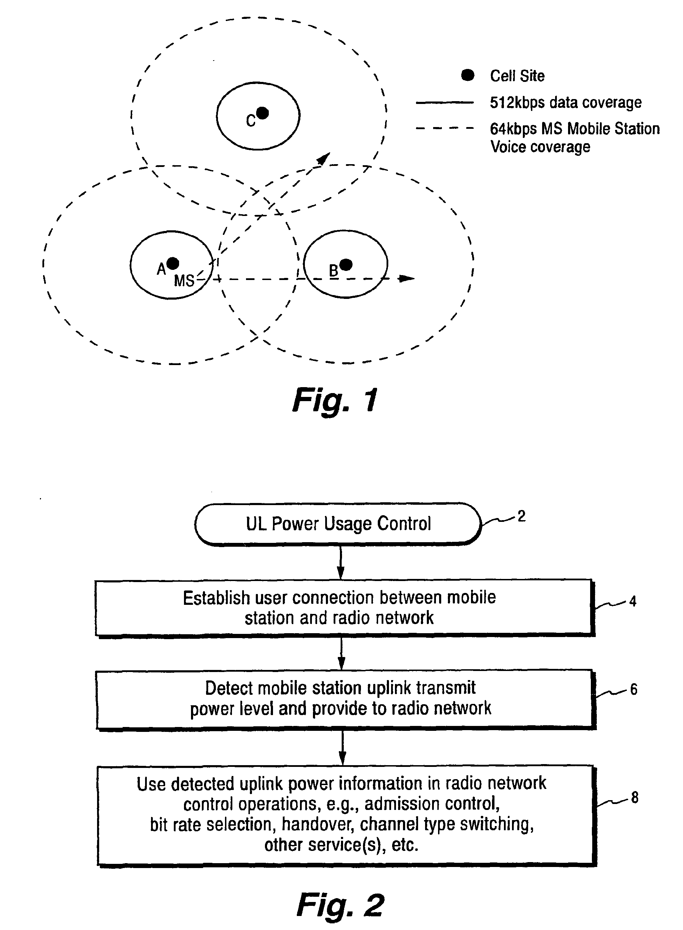

Consider the example situation illustrated in Fig. 1. A mobile station is currently conducting a voice communication over a user connection between the mobile station and cell site A. The voice communication uses a relatively low bit rate, e.g., 64 kbps. As shown in Fig. 1, the uplink coverage or range of the mobile station at this relatively low voice data rate with respect to cell site A is indicated in a dashed line circle. Outside that circular range or coverage area, the base station at cell site A can not reliably receive transmissions from the mobile station. In fact, the connection may be dropped by cell site A if the mobile station moves outside of that coverage area.

Assume that a request is made to add a data packet service to the user connection resulting in the overall bit rate in the uplink direction increasing to 512 kbps. As illustrated in Fig. 1, the corresponding coverage or range in the uplink direction (shown which a solid line circle) "shrinks" substantially to a much smaller radius about cell site A. While it is possible to deliver the increased bit rate service to the mobile station in its current location quite near the cell site A, if the mobile station moves even only slightly away from cell site A towards cell site B or C, as indicated in the dashed arrow paths, the mobile station would be out of range/coverage from it serving cell site A. In fact, the mobile station would also be out of range/coverage from the nearest neighboring sites B and C resulting in a lost user connection.

While network operators could deploy base station cell sites even closer together than they are in current second generation systems to accommodate small coverage areas associated with higher data rates, this would result in excessive equipment and deployment costs. Moreover, a substantial portion of the traffic carried over user connections will likely not require the higher data rates so that the costly, closer deployment of base station cell sites may only infrequently be utilized.

Another approach is for a mobile station to send a power alarm to the radio network when it is close to its maximum output power level. Unfortunately, with this approach, it may be too late for the radio network to change the conditions of the user connection, e.g., switch to a lower bit rate, before the mobile station moves out of coverage. A related problem arises with other user connection services such as handover and channel switching. The radio network may order a handover or channel switching, e.g., switch to a higher bit rate channel or format, assuming that the mobile station has sufficient uplink transmit power capacity to satisfactorily continue the communication after the handover or channel switch occurs. This assumption may be wrong, resulting in a lost connection. In a handover from cell site A to cell site B in Fig. 1, for example, the mobile station may leave the coverage of cell site A but still be outside of the coverage of cell site B. With channel switching, a mobile station may be at or close to its maximum uplink power, and therefore, a raised bit rate may cause the base station to lose the transmission from the mobile station.

The present invention overcomes the above-identified challenges by specifically taking into account the mobile station's current uplink transmit power capacity. A method and a radio network control node are provided according to the appended claims. Once a user connection between a mobile station and the radio network is established, the current transmit power level of the mobile station is detected. Information regarding that detected power level is provided to the radio network for use in one or more radio control operations. Example, non-limiting control operations include admission control of new connections, bit rate changes, handover, power control, and other radio network control algorithms that may impact a user connection. The information regarding the detected uplink power level is preferably included with an uplink message otherwise already-transmitted from the mobile station to the radio network on a regular basis. This "piggybacking" of uplink power level information on existing messages allows for easy implementation of the present invention with minimal signaling overhead.

A method for indicating subscriber unit transmission power is described in document US-A-5 991 618.

In a preferred example embodiment of the present invention, a radio network control node determines an amount of radio coverage for the mobile station based on the provided uplink, mobile transmit power level information. The radio network control node decides whether to change some aspect of the user connection based on that coverage determination, e.g., a bit rate increase or decrease, addition of a new service to the existing connection, a handover, etc. Other radio-related parameters may be considered in the decision such as the current interference level in a particular cell. The radio network controller then decides, for example, whether a first bit rate currently assigned to the user connection can be safely changed to a second higher bit rate or if a handover to a neighboring cell can be accommodated without losing or deteriorating the user connection.

In one example implementation in a radio network control node, an admission controller is configured to evaluate admission requests from mobile stations and requests from other controllers to change some aspect of a connection with a mobile station. The admission controller may also evaluate the impact of such requests on the interference level in a cell or how much higher one mobile station's transmit power level is compared to other mobile's transmitting in a particular cell. A channel rate controller is configured to handle transmission rate changes associated with a mobile station connection. A handover controller is configured to request a handover of the mobile station connection from a first cell to a second cell. Other controllers and other configurations may of course also be employed.

### BRIEF DESCRIPTION OF THE DRAWINGS

The foregoing and other objects, features, and advantages of the invention will be apparent from the following description of preferred example embodiments as well as illustrated in the accompanying drawings in which reference characters refer to the same parts throughout. While individual functional blocks and components are shown in many of the figures, those skilled in the art will appreciate these functions may be performed by individual hardware circuits, by a suitably programmed digital microprocessor or general purpose computer, by an application specific integrated circuit (ASIC), and/or by one or more digital signaling processes (DSPs).
Fig. 1 is a diagram illustrating two different uplink coverage scenarios for neighboring cell sites for a mobile station connection;
Fig. 2 is a flowchart type diagram illustrating an uplink power usage control in accordance with one example embodiment of the present invention;
Fig. 3 is a function block diagram illustrating a mobile radio communications system in which the present invention may be advantageously employed;
Fig. 4 is a function block diagram of a radio network controller and a base station shown in Fig. 3;
Fig. 5 is a function block diagram of a mobile station;
Fig. 6 is a simplified message format that may be employed in one example implementation of the present invention;
Fig. 7 is an illustration of current uplink mobile station transmit power level;
Fig. 8 is a function block diagram of a radio network controller showing various software entities that may be employed in accordance with one non-limiting, example embodiment of the present invention; and
Fig. 9 is a flowchart type diagram illustrating an admission control method in accordance with yet another non-limiting, example embodiment of the present invention.

### DETAILED DESCRIPTION OF THE DRAWINGS

In the following description, for purposes of explanation and not limitation, specific details are set forth, such as particular embodiments, network architectures, signaling flows, protocols, techniques, etc., in order to provide an understanding of the present invention. However, it will be apparent to one skilled in the art that the present invention may be practiced in other embodiments that depart from these specific details. For example, while various aspects or parameters of a mobile radio user connection are identified for purposes of illustration, these particular aspects or parameters are provided only for purposes of example and not for limitation. In other instances, detailed descriptions of well-known methods, interfaces, devices, protocols, and signaling techniques are omitted so as not to obscure the description of the present invention with unnecessary detail.

A general example embodiment of the present invention is now provided with reference to an uplink power usage control method (block 2) illustrated in flowchart format in Fig. 2. Initially, a user connection is established between a mobile station and a radio network (block 4). That established user connection may have a particular service or services associated with it, e.g., voice service. As the mobile station uses the established connection and service(s), it transmits information over the user connection in the uplink direction from the mobile station to the radio network information at a certain uplink transmit power level. This uplink transmit power level is detected, e.g., by the mobile station itself, and provided to the radio network (block 6). The power level can be sent either as an absolute value or as a percentage of the maximum level. The radio network then uses the detected uplink power information in one or more radio network control operations. For example, the radio network may use the detected uplink transmit power information to perform various admission control operations such as modifying the bit rate on the mobile station user connection, executing a handover, admitting a new call, providing a new service to an existing call, regulating power or interference levels.

Any one of these control operations, even though indicated as desirable perhaps based on other factors, may not be advisable when the detected uplink power of the mobile station is considered. For example, if the mobile station does not have sufficient uplink power to accommodate a new or different service or other changed aspect that impacts the mobile user connection, such a change to the connection may well need to be avoided. The mobile radio network may also want to take into account the amount of increased power required by a proposed change in the user connection. If the mobile station would be required to transmit at or near at a much higher power level, the mobile radio network may decide that because of current congestion in the network and/or high interference levels, it is not desirable to increase this particular mobile station's transmit power.

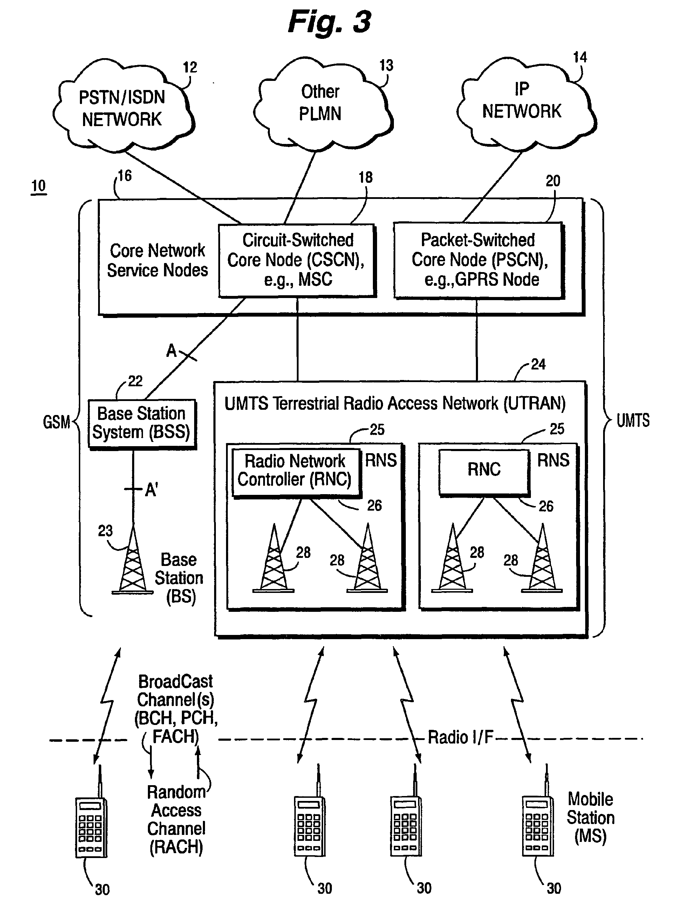

One advantageous application of the present invention is now described in the non-limiting, example context of a mobile telecommunications system 10 shown in Fig. 3. A representative, circuit-switched, external core network, shown as a cloud 12 may be for example the public switched telephone network (PSTN) and/or the integrated services digital network (ISDN). Another circuit-switched, external core network may correspond to another Public Land Mobile radio Network (PLMN) 13. A representative, packet-switched, external core network shown as cloud 14 may be for example an IP network such as the Internet. The core networks are coupled to corresponding network service nodes 16. The PSTN/ISDN network 12 and other PLMN network 13 are connected to a circuit-switched core node (CSCN), such as a Mobile Switching Center (MSC), that provides circuit-switched services. In an existing cellular network model, here the Global System for Mobile Communications (GSM), the MSC 18 is connected over an interface A to a base station subsystem (BSS) 22 which in turn is connected to a radio base station 23 over an interface A'. The packet-switched network 14 is connected to a packet-switched core node (PSCN), e.g., a General Packet Radio Service (GPRS) node 20 tailored to provide packet-switched type services in the context of GSM which is sometimes referred to as the Serving GPRS Service Node (SGSN). Each of the core network service nodes 18 and 20 also connects to a UMTS terrestrial radio access network (UTRAN) 24 over a radio access network interface. The UTRAN 24 includes one or more radio network systems (RNS) 25 each with a radio network controller (RNC) 26 coupled to a plurality of base stations (BS) 28 and to the RNCs in the UTRAN 24.

Radio access in the GSM system employs well-established TDMA principles. Preferably, radio access over the radio interface in UMTS is based upon wideband, Code Division Multiple Access (W-CDMA) or other CDMA system with individual radio channels allocated using CDMA channelization or spreading codes. Although CDMA is used as the preferred, example access method, the invention may be employed in any wireless system where power is a limited resource. CDMA provides wide bandwidth for multimedia services and other high transmission rate demands as well as robust features like diversity handoff and RAKE receivers to ensure high quality communication service in a frequently changing environment. Each mobile station is assigned its own scrambling code in order for a base station 28 to identify transmissions from that particular mobile station. The mobile station also uses its own scrambling code to identify transmissions from the base station either on a general broadcast or common channel or transmissions specifically intended for that mobile station. That scrambling code distinguishes the scrambled signal from all of the other transmissions and noise present in the same area.

Different types of control channels are shown bridging the radio interface. For example, in the forward or downlink direction, there are several types of broadcast channels including a general broadcast channel (BCH), a paging channel (PCH), and a forward access channel (FACH) for providing various types of control messages to mobile stations. In the reverse or uplink direction, a random access channel (RACH) is employed by mobile stations whenever access is desired to perform location registration, call origination, page response, and other types of access operations.

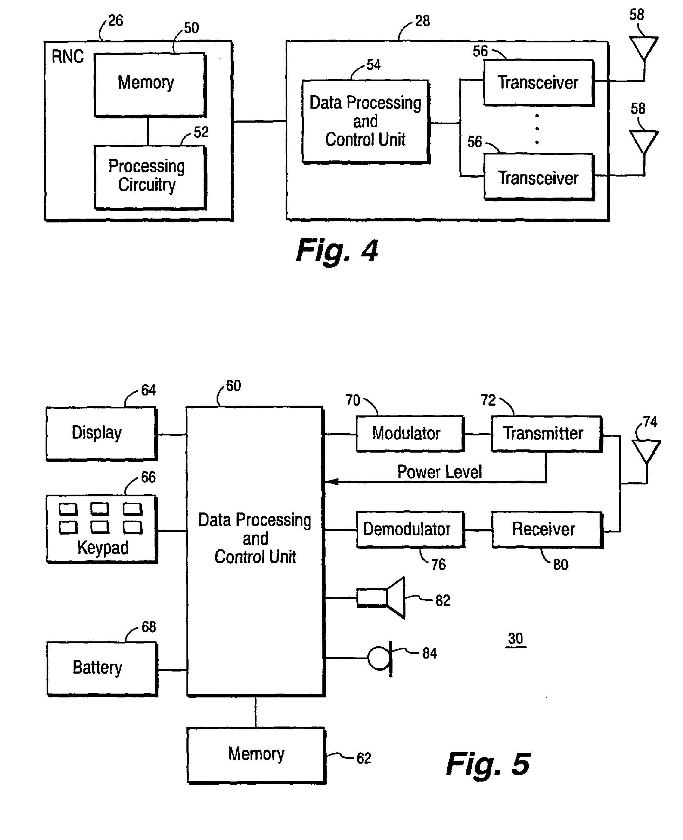

Simplified function block diagrams of the radio network controller 26 and base station 28 are shown in Fig. 4. The radio network controller 26 includes a memory 50 coupled to data processing circuitry 52 that performs numerous radio and data processing operations required to perform its control function and conduct communications between the RNC and other entities such as the core network service nodes, other RNCs, and base stations. Data processing circuitry 52 may include any one or a combination of suitably programmed or configured general purpose computer, microprocessor, microcontroller, dedicated logic circuitry, DSP, ASIC, etc., as described above. The base station 28 includes a data processing and control unit 54 which, in addition to performing processing operations relating to communications with the RNC 26, performs a number of measurement and control operations associated with base station radio equipment including transceivers 56 connected to one or more antennas 58.

A simplified function block diagram of a mobile station 30 is shown in Fig. 5. The mobile station 30 includes an antenna 74 for transmitting signals to and for receiving signals from a base station 28. The antenna 74 is coupled to radio transceiving circuitry including a modulator 70 coupled to a transmitter 72 and a demodulator 76 coupled to a receiver 80. The radio transceived signals include signaling information in accordance with an air interface standard applicable to the wideband CDMA system shown in Fig. 3. The data processing and control unit 60 and memory 62 include the circuitry required for implementing audio, logic, and control functions of the mobile station. Memory 62 stores both programs and data. Conventional speaker or earphone 82, microphone 84, keypad 66, and display 64 are coupled to the data processing and control unit 60 to make up the user interface. A battery 68 powers the various circuits required to operate the mobile station. The mobile station 30 includes circuitry in the transmitter, for example, to detect the current transmit power level and provide that power level to the data processing and control unit 60. Power level information may then be transmitted to the radio network preferably along with some other regularly sent uplink message as will be described further below.

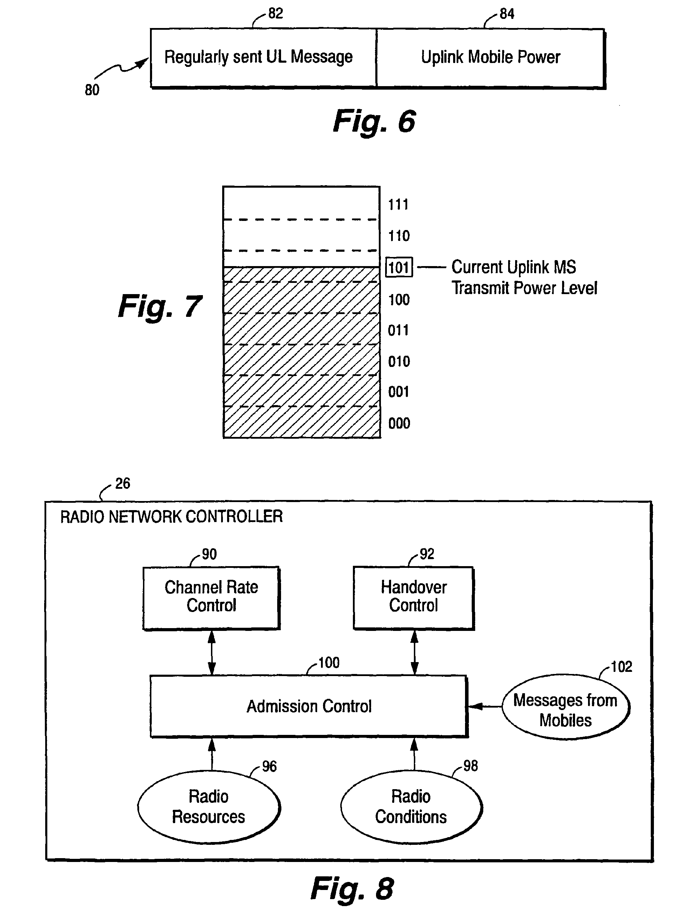

Fig. 6 illustrates in simplified fashion an example mechanism for conveying the mobile station uplink transmit power level to the radio network. Specifically, an uplink message 80 includes a regularly sent uplink message 82 which may be, for example, downlink path loss measurement messages typically regularly sent to the radio network by the mobile station. Other regularly or periodically sent messages may also be employed. Field 84 is appended to the regularly sent uplink message 82, and may include for example, a number of bits indicating the current uplink power level of the mobile station. Although the uplink message 80 may be implemented at any transmission protocol layer, in one example, the message could be a data link protocol layer message or a network protocol layer message.

Fig. 7 illustrates different uplink power levels identified using associated three bit, power level indicators. In the example shown in Fig. 7, the current uplink mobile station transmit power level is indicated by the three bits "101." These three bits "101" may then be placed in the field 84 of the message 80 shown in Fig. 6. Because of the effects of fast fading and other external factors, it may be advisable for the radio network to average, smooth, or otherwise filter the received uplink power indicator messages. The averaged/filtered, uplink power usage would therefore be a more stable and accurate prediction of the mobile station's uplink power level.

In any event, the radio network is regularly (although not necessarily frequently) informed of the current percentage of maximum transmit power of the mobile station. In the Fig. 7 example, the received power level indicator bits "101" corresponds to a sixth power level out of eight power levels. The radio network determines that the mobile station is currently transmitting at approximately seventy-five percent (6/8 = 0.75 = 75%) of its maximum transmit power level. With this information, the radio network determines what coverage may be obtained for the user connection under requested or other different service scenarios. If there is sufficient remaining transmit power level capacity, the radio network may decide to permit the data rate over the user connection to be increased, or alternatively, to provide some other service that will require an increased uplink transmit power from the mobile station. Knowing how much capacity remains in the mobile station, the radio network is better able to ensure that the service provided to the user connection does not exceed the mobile station's capabilities resulting in a deteriorated connection or even a lost connection. This information is also useful to ensure other mobile users are not adversely impacted, e.g., because of increased interference.

Consider the example where a mobile station is currently transmitting at 45% of its maximum power level over a user connection with a 64 kbps best effort service. The mobile station incorporates with a regularly sent message 82 uplink mobile power level indicator bits corresponding to the mobile's current transmit power level of 45% in this example. The radio network receives the message, decodes it, and determines the uplink transmit power level. Assume the overall mobile communications system load decreases, and therefore, it is possible from the radio network resources perspective to provide the mobile user connection an increased bit rate service, e.g., 512 kbps. This new bit rate is eight times that of the current bit rate of 64 kbps. The RNC admission control software determines amount of increased power is required to transmit at 512 kbps from the mobile station's current location.

The radio network is also aware from the messages sent from the mobile station that the mobile station is currently at 45% percent of its maximum transmit power level capacity. In this example scenario, it cannot accommodate transmission at 512 kbps given its current power level from its current location. However, the radio network may decide to partially increase the transmission rate over the user connection, e.g., from 64 kbps to 128 kbps. Thus, the present invention allows the flexibility to change services provided to a mobile user connection while still making sure that such a change can be accommodated by the mobile station without adversely impacting the user connection or other mobile connections. As mentioned above, the radio network may decide that even though the mobile station has sufficient additional capacity to transmit at a higher data rate, for example, the current interference level or noise level in the cell area around that mobile station may be too high to permit such an increase. Also, if the mobile station would end up transmitting at a power level much higher than other mobile stations in the area, the increase may not be made. Further, the radio network may detect that the mobile station is currently transmitting at or near its maximum capacity and decide that it is necessary to remove a service, e.g., lower the bit rate, in order to sustain the user connection. By lowering the bit rate, the effective coverage for the user connection is increased.

Preferably, though not necessarily, these types of decisions are made in the radio network controller 26. An example configuration for implementing the present invention in the radio network is illustrated in Fig. 8 in function block format. The functional entities may be implemented, for example, as software routines. An admission control entity 100 receives information from a channel rate control entity 90, and a handover control entity 92, as well as messages from mobile stations 102 containing various information including for example uplink mobile power levels. The admission control 100 also monitors current radio resources 96 and current radio conditions 98, e.g., noise and interference levels, in the various cell areas in the radio network. The channel rate control 90 places requests to the admission control 100 to either increase or decrease a data rate for a user connection. Handover control entity 92 makes handover requests to the admission control 100 to handover specific user connections from one cell to another. Of course, other types of control entities may be employed representative of other services or aspects of a user connection which can be changed by the admission control 100.

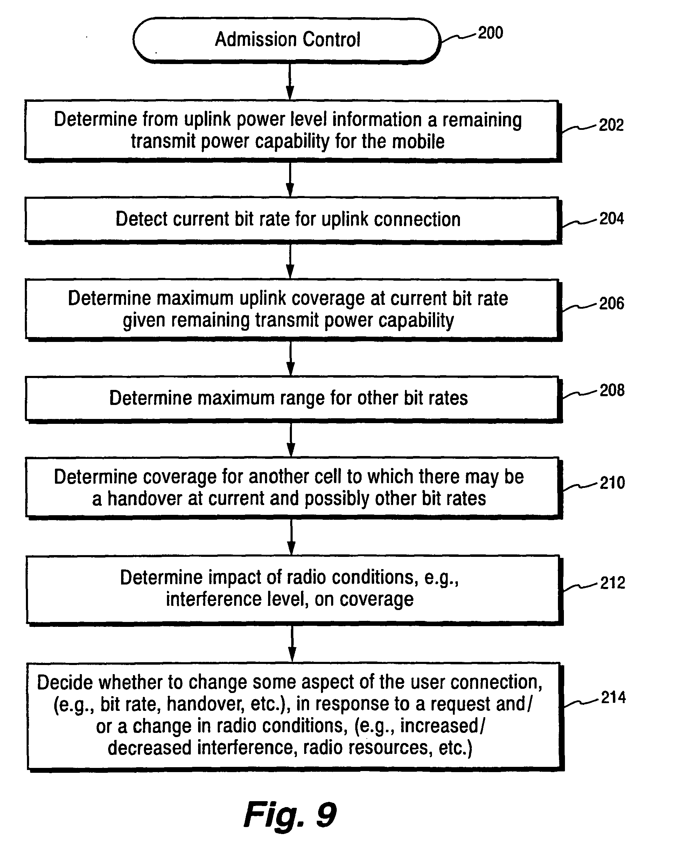

An admission control routine (block 200) illustrated in Fig. 9 is another example way of implementing the present invention using the example radio network controller configuration shown in Fig. 8. The admission control 100 determines from uplink power information provided with regularly transmitted uplink messages from the mobile station a current, additional transmit power capability/capacity for the mobile station (block 202). The admission control 100 also detects a current bit rate for the user connection, e.g., from the channel rate control 90 (block 204). With this information, the admission control 100 may determine how much higher bit rate can be allocated to the current user. Assume that the power level is 45% and the bit rate is 32kbps. If power and bit rate are assumed to be strictly proportional, the bit rate may be raised to twice the amount, i.e., 64kbps, which would require approximately 90% of the mobile's maximum power. Admission control 100 may also determine the maximum coverage/range for other available bit rates for this user connection (block 208). In this way, the admission control 100 determines, based on the mobile station's current transmit power level, what bit rate changes may be appropriate (either increase or decrease) and which may not.

Similarly, the admission control 100 may determine the coverage for one or more neighboring cells to which there may be a handover at current, and if desired, other bit rates (block 210). Admission control 100 may decide not to admit a mobile user into a new cell as part of a handover because that mobile station will not have the power to reach the destination base station. The handover may also be denied if the mobile station will need considerably more transmit power to sustain the connection in the destination cell than other mobile stations communicating in the destination cell. Moreover, the admission control 100 may decide to admit the handover connection but only at a lower bit rate to minimize the interference impact on other users in the destination cell. As described above, the admission control may also take into account different radio conditions such as interference level on the coverage determination as well as available radio resources (block 212). With this type of information, the admission control 100 may decide to permit change of some aspect of the user connection including for example, changing the bit rate, permitting a handover to a neighboring cell, etc., in response to a request and/or a change in radio conditions (block 214).

Using the present invention, when the mobile station approaches its maximum output power, remedial action may be taken, e.g., decrease a service like lowering the bit rate, instead of losing the call connection. In this way, valuable radio resources are not allocated to a mobile station that cannot use them. On the other hand, the radio network can offer additional services and resources if they are available and their use will not have an adverse or unacceptable impact. Ultimately, admission control and other control entities in the radio network have a more complete set of information that allow for better decisions.

While the present invention has been described in terms of a particular embodiment, those skilled in the art will recognize that the present invention is not limited to the specific example embodiments described and illustrated herein. Different formats, embodiments, and adaptations besides those shown and described as well as many modifications, variations, and equivalent arrangements may also be used to implement the invention. Accordingly, it is intended that the invention be limited only by the scope of the claims appended hereto.

## Claims

1. A method including transmitting data over a user connection from a mobile station (30) to a radio network (24) in a mobile radio communications system and detecting a power level at which the mobile station is transmitting, the method further **characterized by**:
providing information regarding the detected power level to the radio network;
the radio network receiving a request for a handover of the user connection from a first cell to a second cell, and
the radio network deciding whether to perform the handover based on the provided power level information.

2. The method in claim 1, wherein information regarding the detected power level is included with a message otherwise already transmitted from the mobile station to the radio network.

3. The method in claim 1, further comprising:
determining an amount of radio coverage for the mobile station based on the provided power level information, and
deciding whether to change an aspect of the user connection based on the coverage determination.

4. The method in claim 3, wherein the aspect is a data rate of the user connection.

5. The method in claim 3, further comprising:
considering a radio-related parameter in the deciding step.

6. The method in claim 1, further comprising:
considering whether execution of the handover results in the mobile station having to increase its transmit power, and if so, whether that increase is acceptable.

7. The method in claim 1, further comprising:
determining a first bit rate associated with the user connection; and
determining whether to change the first bit rate to a second higher bit rate based on the provided power level information.

8. The method in claim 7, wherein the first bit rate is not changed if the mobile station does not have sufficient remaining transmit power capacity to accommodate the second bit rate.

9. The method in claim 1, further comprising:
determining a coverage of the mobile station in the second cell based on the provided power level information.

10. The method in claim 9, wherein the deciding step further includes considering a bit rate associated with the user connection in the second cell.

11. The method in claim 1, further comprising:
determining from the uplink power level a remaining transmit power capability for the mobile station, and
deciding whether to change an aspect of the user connection based on the remaining transmit power capability for the mobile station.

12. The method in claim 11, further comprising:
determining a maximum uplink coverage at a current bit rate for the uplink user connection given the remaining transmit power capability for the mobile station.

13. The method in claim 11, further comprising:
determining a maximum uplink coverage for different bit rates for the uplink user connection given the remaining transmit power capability for the mobile station.

14. The method in claim 11, further comprising:
determining a maximum uplink coverage for a handover of the user connection given the remaining transmit power capability for the mobile station.

15. The method in claim 11, further comprising:
determining an impact on the maximum uplink coverage of the user connection given the remaining transmit power capability for the mobile station in light of a current radio interference level.

16. A radio network control node capable of communicating with a mobile station (30) over a radio interface using radio resources from a pool of radio resources, **characterized by**:
an admission controller (100) configured to evaluate a radio resource request associated with the mobile station connection taking into account a current transmission power level of the mobile station (30) transmitting on the mobile station connection, and
a handover controller (92) configured to request the admission controller for a handover of the mobile station connection from a first cell to a second cell,
wherein the admission controller is configured to determine whether the mobile station has sufficient uplink power capacity to sustain the user connection with the second cell based on the mobile station transmission power level.

17. The radio network control node in claim 16, wherein the admission controller is configured to use the mobile station power level to determine a coverage or range for the mobile station uplink connection.

18. The radio network control node in claim 16, further comprising:
a channel rate controller (90) configured to handle transmission rate changes associated with a mobile station connection; and
wherein the admission controller is configured to evaluate a radio resource request from the channel rate controller to change the transmission rate.

19. The radio network control node in claim 18, wherein the admission controller is configured to adjust the bit rate on the mobile station connection to a value different than that requested by the channel rate controller in order to maintain coverage.

20. The radio network control node in claim 16, wherein the admission controller is configured to filter transmission power level reports received from the mobile station.

21. The radio network control node in claim 16, further comprising:
means (102) for receiving a message from a mobile station that includes information about the mobile station's uplink transmit power level associated with a user connection between the mobile station and the radio network; and
means (100) for performing a control operation affecting the user connection using the uplink transmit power level information.

22. The radio network control node in claim 21, wherein the control operation includes changing the data rate of the user connection.

23. The radio network control node in claim 21, wherein the control operation includes interference level regulation.

24. The radio network control node in claim 21, wherein the means for controlling determines whether the control operation results in the mobile station having to increase its transmit power, and if so, whether that increase is acceptable.

## Patentansprüche

1. Verfahren, die folgenden Schritte aufweisend: Senden von Daten über eine Teilnehmerverbindung von einer Mobilstation (30) an ein Funknetzwerk (24) in einem Mobilfunk-Kommunikationssystem und Ermitteln eines Leistungspegels, mit dem die Mobilstation sendet, wobei das Verfahren ferner durch die folgenden Schritte **gekennzeichnet** ist:
Übergeben von Information bezüglich des ermittelten Leistungspegels an das Funknetzwerk;
durch das Funknetzwerk erfolgendes Empfangen einer Anforderung einer Weiterschaltung der Teilnehmerverbindung von einer ersten Zelle zu einer zweiten Zelle; und
durch das Funknetzwerk auf der Grundlage der übergebenen Leistungspegelinformation erfolgendes Entscheiden, ob die Weiterschaltung durchgeführt werden soll.

2. Verfahren nach Anspruch 1, wobei Information bezüglich des ermittelten Leistungspegels in einer Nachricht enthalten ist, die ohnehin von der Mobilstation an das Funknetzwerk gesendet wird.

3. Verfahren nach Anspruch 1, ferner die folgenden Schritte umfassend:
Bestimmen eines Grades der Funkversorgung für die Mobilstation auf der Grundlage der übergebenen Leistungspegelinformation; und
Entscheiden, ob ein Aspekt der Teilnehmerverbindung geändert werden soll, auf der Grundlage der Funkversorgungsbestimmung.

4. Verfahren nach Anspruch 3, wobei der Aspekt eine Datenrate der Teilnehmerverbindung ist.

5. Verfahren nach Anspruch 3, ferner den folgenden Schritt umfassend:
Berücksichtigen eines funkbezogenen Parameters im Entscheidungsschritt.

6. Verfahren nach Anspruch 1, ferner den folgenden Schritt umfassend:
Berücksichtigen, ob die Ausführung der Weiterschaltung dazu führt, daß die Mobilstation ihre Sendeleistung erhöhen muß, und wenn ja, ob diese Erhöhung zulässig ist.

7. Verfahren nach Anspruch 1, ferner die folgenden Schritte umfassend:
Bestimmen einer ersten Bitrate, die der Teilnehmerverbindung zugeordnet ist; und
Bestimmen, ob die erste Bitrate in eine zweite, höhere Bitrate geändert werden soll, auf der Grundlage der übergebenen Leistungspegelinformation.

8. Verfahren nach Anspruch 7, wobei die erste Bitrate nicht geändert wird, wenn die Mobilstation keine hinreichende verbleibende Sendeleistungskapazität hat, um die zweite Bitrate zu bewältigen.

9. Verfahren nach Anspruch 1, ferner den folgenden Schritt umfassend:
Bestimmen einer Versorgung der Mobilstation in der zweiten Zelle auf der Grundlage der übergebenen Leistungspegelinformation.

10. Verfahren nach Anspruch 9, wobei der Entscheidungsschritt ferner den folgenden Schritt aufweist: Berücksichtigen einer Bitrate, die der Teilnehmerverbindung in der zweiten Zelle zugeordnet ist.

11. Verfahren nach Anspruch 1, ferner die folgenden Schritte umfassend:
Bestimmen einer verbleibenden Sendeleistungsfähigkeit für die Mobilstation aus dem Aufwärtsstreckenleistungspegel; und
Entscheiden, ob ein Aspekt der Teilnehmerverbindung geändert werden soll, auf der Grundlage der verbleibenden Sendeleistungsfähigkeit für die Mobilstation.

12. Verfahren nach Anspruch 11, ferner den folgenden Schritt umfassend:
Bestimmen einer maximalen Aufwärtsstreckenversorgung bei einer aktuellen Bitrate für die Aufwärtsstrecken-Teilnehmerverbindung in Anbetracht der verbleibenden Sendeleistungsfähigkeit für die Mobilstation.

13. Verfahren nach Anspruch 11, ferner den folgenden Schritt umfassend:
Bestimmen einer maximalen Aufwärtsstreckenversorgung für unterschiedliche Bitraten für die Aufwärtsstrecken-Teilnehmerverbindung in Anbetracht der verbleibenden Sendeleistungsfähigkeit für die Mobilstation.

14. Verfahren nach Anspruch 11, ferner den folgenden Schritt umfassend:
Bestimmen einer maximalen Aufwärtsstreckenversorgung für eine Weiterschaltung der Teilnehmerverbindung in Anbetracht der verbleibenden Sendeleistungsfähigkeit für die Mobilstation.

15. Verfahren nach Anspruch 11, ferner den folgenden Schritt umfassend:
Bestimmen einer Auswirkung auf die maximale Aufwärtsstreckenversorgung der Teilnehmerverbindung in Anbetracht der verbleibenden Sendeleistungsfähigkeit für die Mobilstation angesichts eines aktuellen Funkstörpegels.

16. Funknetzwerk-Steuerungsknoten, der mit einer Mobilstation (30) über eine Funkschnittstelle unter Verwendung von Funkressourcen aus einem Vorrat von Funkressourcen zu kommunizieren imstande ist, **gekennzeichnet durch**:
eine Zugangssteuerungseinrichtung (100), die dafür konfiguriert ist, eine der Mobilstationsverbindung zugeordnete Funkressourcenanforderung unter Berücksichtigung eines aktuellen Sendeleistungspegels der Mobilstation (30), die auf der Mobilstationsverbindung sendet, zu bewerten; und
eine Weiterschaltungssteuerungseinrichtung (92), die dafür konfiguriert ist, die Zugangssteuerungseinrichtung zu einer Weiterschaltung der Mobilstationsverbindung von einer ersten Zelle zu einer zweiten Zelle aufzufordern;
wobei die Zugangssteuerungseinrichtung dafür konfiguriert ist, auf der Grundlage des Sendeleistungspegels der Mobilstation zu bestimmen, ob die Mobilstation hinreichende Aufwärtsstreckenleistungskapazität hat, um die Teilnehmerverbindung mit der zweiten Zelle aufrechtzuerhalten.

17. Funknetzwerk-Steuerungsknoten nach Anspruch 16, wobei die Zugangssteuerungseinrichtung dafür konfiguriert ist, den Leistungspegel der Mobilstation zu verwenden, um eine Versorgung oder Reichweite für die Aufwärtsstreckenverbindung der Mobilstation zu bestimmen.

18. Funknetzwerk-Steuerungsknoten nach Anspruch 16, ferner umfassend:
eine Kanalratensteuerungseinrichtung (90), die dafür konfiguriert ist, Übertragungsratenänderungen zu bewältigen, die einer Mobilstationsverbindung zugeordnet sind; und
wobei die Zugangssteuerungseinrichtung dafür konfiguriert ist, eine Funkressourcenanforderung von der Kanalratensteuerungseinrichtung zu bewerten, um die Übertragungsrate zu ändern.

19. Funknetzwerk-Steuerungsknoten nach Anspruch 18, wobei die Zugangssteuerungseinrichtung dafür konfiguriert ist, die Bitrate auf der Mobilstationsverbindung an einen anderen als den durch die Kanalratensteuerungseinrichtung angeforderten Wert anzupassen, um die Versorgung beizubehalten.

20. Funknetzwerk-Steuerungsknoten nach Anspruch 16, wobei die Zugangssteuerungseinrichtung dafür konfiguriert ist, von der Mobilstation empfangene Sendeleistungspegelberichte zu filtern.

21. Funknetzwerk-Steuerungsknoten nach Anspruch 16, ferner umfassend:
Mittel (102) zum Empfangen einer Nachricht von einer Mobilstation, die Information über den Aufwärtsstrecken-Sendeleistungspegel der Mobilstation aufweist, der einer Teilnehmerverbindung zwischen der Mobilstation und dem Funknetzwerk zugeordnet ist; und
Mittel (100) zum Durchführen einer die Teilnehmerverbindung beeinflussenden Steuerungsoperation unter Verwendung der Aufwärtsstrecken-Sendeleistungspegelinformation.

22. Funknetzwerk-Steuerungsknoten nach Anspruch 21, wobei die Steuerungsoperation den folgenden Schritt aufweist: Ändern der Datenrate der Teilnehmerverbindung.

23. Funknetzwerk-Steuerungsknoten nach Anspruch 21, wobei die Steuerungsoperation eine Störpegelregulierung aufweist.

24. Funknetzwerk-Steuerungsknoten nach Anspruch 21, wobei das Mittel zur Steuerung bestimmt, ob die Steuerungsoperation dazu führt, daß die Mobilstation ihre Sendeleistung erhöhen muß, und wenn ja, ob diese Erhöhung zulässig ist.

## Revendications

1. Procédé comprenant une transmission de données via une connexion d'utilisateur à partir d'une station mobile (30) à un réseau radio (24) dans un système de communication radio mobile et détection d'un niveau de puissance avec lequel la station mobile transmet, le procédé étant **caractérisé en outre par**:
la fourniture d'informations concernant le niveau de puissance détecté au réseau radio;
le réseau radio recevant une demande pour un transfert de la connexion d'utilisateur à partir d'une première cellule à une seconde cellule, et
le réseau radio décidant s'il faut réaliser le transfert sur la base des informations de niveau de puissance fournies.

2. Procédé selon la revendication 1, dans lequel des informations concernant le niveau de puissance détecté sont comprises dans un message déjà transmis autrement à partir de la station mobile au réseau radio.

3. Procédé selon la revendication 1, comprenant en outre:
la détermination d'une quantité de couverture radio pour la station mobile sur la base des informations de niveau de puissance fournies, et
la décision selon laquelle il faut changer un aspect de la connexion d'utilisateur sur la base de la détermination de couverture.

4. Procédé selon la revendication 3, dans lequel l'aspect est un débit de données de la connexion d'utilisateur.

5. Procédé selon la revendication 3, comprenant en outre:
la considération d'un paramètre lié à la radio dans l'étape de décision.

6. Procédé selon la revendication 1, comprenant en outre:
la considération selon laquelle l'exécution du transfert résulte dans le fait que la station mobile doit augmenter sa puissance de transmission, et si oui, si cette augmentation est acceptable.

7. Procédé selon la revendication 1, comprenant en outre:
la détermination d'un premier débit binaire associé à la connexion d'utilisateur; et
la détermination s'il faut changer le premier débit binaire en un second débit binaire plus élevé sur la base des informations de niveau de puissance fournies.

8. Procédé selon la revendication 7, dans lequel le premier débit binaire n'est pas changé si la station mobile n'a pas une capacité de puissance d'émission restante suffisante pour satisfaire le second débit binaire.

9. Procédé selon la revendication 1, comprenant en outre:
la détermination d'une couverture de la station mobile dans la seconde cellule sur la base des informations de niveau de puissance fournies.

10. Procédé selon la revendication 9, dans lequel l'étape de décision comprend en outre la considération d'un débit binaire associé à la connexion d'utilisateur dans la seconde cellule.

11. Procédé selon la revendication 1, comprenant en outre:
la détermination à partir d'un niveau de puissance de liaison montante d'une capacité de puissance d'émission restante pour la station mobile, et
la décision s'il faut changer un aspect de la connexion d'utilisateur sur la base de la capacité de puissance d'émission restante pour la station mobile.

12. Procédé selon la revendication 11, comprenant en outre:
la détermination d'une couverture de liaison montante maximum à un débit binaire actuel pour la connexion d'utilisateur de liaison montante étant donné la capacité de puissance d'émission restante pour la station mobile.

13. Procédé selon la revendication 11, comprenant en outre:
la détermination d'une couverture de liaison montante maximum pour différents débits binaires pour la connexion d'utilisateur de liaison montante étant donné la capacité de puissance d'émission restante pour la station mobile.

14. Procédé selon la revendication 11, comprenant en outre:
la détermination d'une couverture de liaison montante maximum pour un transfert de la connexion d'utilisateur étant donné la capacité de puissance d'émission restante pour la station mobile.

15. Procédé selon la revendication 11, comprenant en outre:
la détermination d'un impact sur la couverture de liaison montante maximum de la connexion d'utilisateur étant donné la capacité de puissance d'émission restante pour la station mobile à la lumière d'un niveau d'interférence radio actuel.

16. Noeud de commande de réseau radio capable de communiquer avec une station mobile (30) sur une interface radio utilisant des ressources radio à partir d'un pool de ressources radio, **caractérisé par**:
un dispositif de commande d'admission (100) configuré pour évaluer une demande de ressource radio associée à la connexion de station mobile prenant en compte un niveau de puissance de transmission actuel de la station mobile (30) émettant sur la connexion de station mobile, et
un dispositif de commande de transfert (92) configuré pour demander au dispositif de commande d'admission un transfert de la connexion de station mobile d'une première cellule à une seconde cellule,
dans lequel le dispositif de commande d'admission est configuré pour déterminer si la station mobile a une capacité de puissance de liaison montante suffisante pour maintenir la connexion d'utilisateur avec la seconde cellule sur la base du niveau de puissance de transmission de la station mobile.

17. Noeud de commande de réseau radio selon la revendication 16, dans lequel le dispositif de commande d'admission est configuré pour utiliser le niveau de puissance de station mobile pour déterminer une couverture ou une gamme pour la connexion de liaison montante de station mobile.

18. Noeud de commande de réseau radio selon la revendication 16, comprenant en outre:
un dispositif de commande de débit de canal (90) configuré pour gérer des variations de débit de transmission associées à une connexion de station mobile; et
dans lequel le dispositif de commande d'admission est configuré pour évaluer une demande de ressource radio à partir du dispositif de commande de débit de canal pour changer le débit de transmission.

19. Noeud de commande de réseau radio selon la revendication 18, dans lequel le dispositif de commande d'admission est configuré pour ajuster le débit binaire sur la connexion de station mobile à une valeur différente de celle demandée par le dispositif de commande de débit de canal afin de maintenir la couverture.

20. Noeud de commande de réseau radio selon la revendication 16, dans lequel le dispositif de commande d'admission est configuré pour filtrer des rapports de niveau de puissance de transmission reçus de la station mobile.

21. Noeud de commande de réseau radio selon la revendication 16, comprenant en outre:
un moyen (102) pour recevoir un message à partir d'une station mobile qui comprend des informations concernant le niveau de puissance d'émission de liaison montante de station mobile associé à une connexion d'utilisateur entre la station mobile et le réseau radio; et
un moyen (100) pour réaliser une opération de commande affectant la connexion d'utilisateur utilisant les informations de niveau de puissance de transmission de liaison montante.

22. Noeud de commande de réseau radio selon la revendication 21, dans lequel l'opération de commande comprend le changement du débit de données de la connexion d'utilisateur.

23. Noeud de commande de réseau radio selon la revendication 21, dans lequel l'opération de commande comprend une régulation de niveau d'interférence.

24. Noeud de commande de réseau radio selon la revendication 21, dans lequel le moyen pour la commande détermine si l'opération de commande résulte dans le fait que la station mobile doit augmenter sa puissance d'émission, et si oui, si cette augmentation est acceptable.
